# EUROPEAN PATENT APPLICATION

(11) **EP 0 544 524 A1**
(43) Date of publication of application: **02.06.1993**
(21) Application number: 92310804.7
(22) Date of filing: 26.11.1992
(51) Int. Cl.: E04D 5/12, A01F 25/13

(54) **Cover**

(30) Priority: 26.11.1991 GB 9125197
(71) Applicant: Halling-Brown, Brett David, Compton Martin, BS18 6JS (GB); Johnson, Keith Reginald Brian, Bath, BA1 7SL (GB)
(72) Inventor: Halling-Brown, Brett David, Compton Martin, BS18 6JS (GB); Johnson, Keith Reginald Brian, Bath, BA1 7SL (GB)
(74) Representative: Jones, Michael Raymond

(57) **Abstract**

A cover is disclosed comprising:
a main sheet (1) formed of a robust flexible material;
one or more than one compartment (2) disposed around the periphery of the main sheet (1) and capable of being filled with water; and
port means (4) for allowing the introduction of water, as ballast, into the compartment(2) and for allowing the discharge of water from the compartment (2).

## Description

This invention relates to a cover, for example (but not exclusively) one which can be used to protect a damaged region of a roof.

When damage is sustained by a roof, for example the dislodgement of tiles by a strong wind, it is often necessary to provide a temporary cover over the damaged region to prevent the entry of rain, snow or hail into the zone below the roof. Under such circumstances, workmen will often attempt, in the face of strong winds, to position a sheet of tarpaulin or other flexible rainproof material over the damaged area and then secure the temporary cover in position with the aid of ropes, or sometimes by placing planks or scaffolding poles along the edges of the cover. Placing such weights in position with a view to holding down the temporary cover usually involves the presence of workmen on or near the roof, which is dangerous particularly if the strong wind is still in force.

Weighting down of the temporary cover is required for two reasons, firstly to prevent the wind getting under the edge of the cover and then lifting it, and secondly to prevent upward movement of the cover caused by a "vacuum effect" induced by the movement of the wind at speed over the upper surface of the cover.

According to the present invention, there is provided a cover comprising:
a main sheet formed of a robust flexible material;
one or more than one compartment disposed around the periphery of the main sheet and capable of being filled with water; and
port means for allowing the introduction of water, as ballast, into the compartment(s) and for allowing the discharge of water from the compartment(s).

The cover may optionally be provided with attachment means to which ropes or the like can be attached for hauling the cover into position and optionally for assisting in holding the cover in position.

The majority of the cover can be formed of a robust plastics material or layers of plastics materials, like the material employed in the construction of inflatable dinghies. Such material can be employed in, for instance, the construction of the main sheet and in the compartment(s). Preferably the chosen material has enough elasticity to accommodate any expansion of water into ice in freezing conditions.

The cover can have any desired shape, but conveniently is rectangular, for example square, particularly when the cover is to be employed as a temporary cover for a roof, but may be differently shaped if the cover is to be used to protect a boat standing on hard ground over winter.

The main sheet can take the form of a single panel but, when large, can be provided with a plurality of transverse ribs, which ribs, like the compartment(s), can be filled with water so that, in use, not only the peripheral regions of the cover are weighted down but also the regions in which the ribs are disposed, to counter the "vacuum effect".

The or each compartment is preferably formed by folding over edge regions towards the central region of the sheet, cutting out excess material in the region of the corners, and then heat welding and/or stitching the edges to the underlying sheet material.

As regards the port means, these can take the form of "snap-on" female fittings which preferably can be opened or closed. Such port means can readily receive a suitable male fitting at the end of a hose. When the cover is in place, the port means can be opened and water can be passed along the hose, via the port means, and into the chamber compartment(s). Once the compartment has been filled with water, the port means can be closed. Alternatively or in addition, the hose can be provided with a valve means.

Before the introduction of water as ballast into the compartment(s), the or each compartment should be in the "flattened" condition, with little or no air present. The introduction of water through the port means causes the or each compartment to fill, without the need to displace any air.

Where there is a single peripheral compartment there can be a single port means, but it is preferred for there to be at least two port means. Where the cover is generally rectangular the two port means can be, for example, at diametrically opposed cover regions. For convenience, however, and to allow greater options for drainage, there are at least four, and preferably more than four, port means.

With regard to any ribs which are optionally present, and which need to be filled with and emptied of water, either the ribs can be sealed with respect to the adjacent compartment(s), in which case it will be necessary to provide separate port means for the ribs, or the ribs can each communicate, at their respective opposite ends, to two spaced apart regions of the peripheral compartment(s).

With regard to the attachment means to which ropes or the like can be attached, this can take the form of a flexible flange in certain peripheral regions of the cover in which are set eyes through which the ropes can be threaded. These ropes can be used for hauling the cover into position before any filling of the compartment(s) takes place and can also be used to help secure the cover in place. Even with a three storey house workmen can attach ropes to various eyes along one side of the cover and can throw the ropes over the roof requiring the temporary cover. The workmen can then, at ground level, walk round to the opposite side of the house and haul on the ropes to pull the cover into the correct position. Depending on the wind it might be necessary to have trailing ropes on the opposite side of the cover to the leading ropes to control the trailing portion of the cover as the cover is being hauled by the leading ropes into the correct position on the roof, prior to filling the compartment(s) with water.

Although a wide variety of shapes and sizes of cover can be manufactured and employed, it is envisaged that there should be several standard sizes so that, if a single cover is insufficient to cover a damaged roof, two or more standard covers could be joined to each other to achieve the desired degree of protection. Steel rings or other fastening means can be employed to link the eyes in the flange along one edge of one cover with the eyes in the flange along an adjacent edge of an adjacent cover.

For convenience, a trolley can be provided, which can have one or more than one wheel. The trolley can carry one or more reels of hoses and reels for ropes and can also carry the folded cover. When damage is sustained to a roof, a roofing contractor can be contacted and he can load the trolley onto a trailer, drive to the damaged building, spread out the cover on the lawn or in the road, attach guide ropes to the cover, attach the filling hoses to the cover and to a tap, haul the cover into the correct position on the roof, and switch on the tap so that the ballast water can be introduced into the compartment(s).

Although much mention has been made in the description of the use of the cover for temporarily covering a damaged region of a roof, the cover could also be used to protect flat surfaces, for example on the ground, or, if suitably shaped, could be used to serve as a cover for boats, such as boats which are moored and left deserted during winter or boats which are standing on hard ground during winter. Many other useful applications of the cover will spring to mind for those wishing to use it.

For a better understanding of the present invention, and to show how the same may be carried into effect, reference will now be made, by way of example, to the accompanying drawings, in which:
Figure 1 is a plan view of one embodiment of a cover in accordance with the present invention;
Figure 2 is a side view of the cover of Figure 1 in inflated condition; and
Figure 3 is a plan view of a different embodiment of cover in accordance with the present invention.

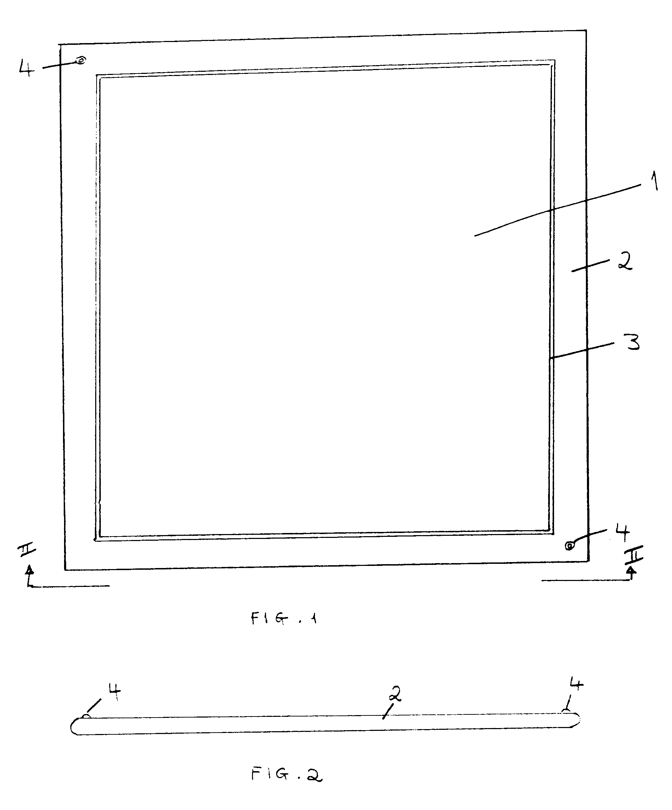

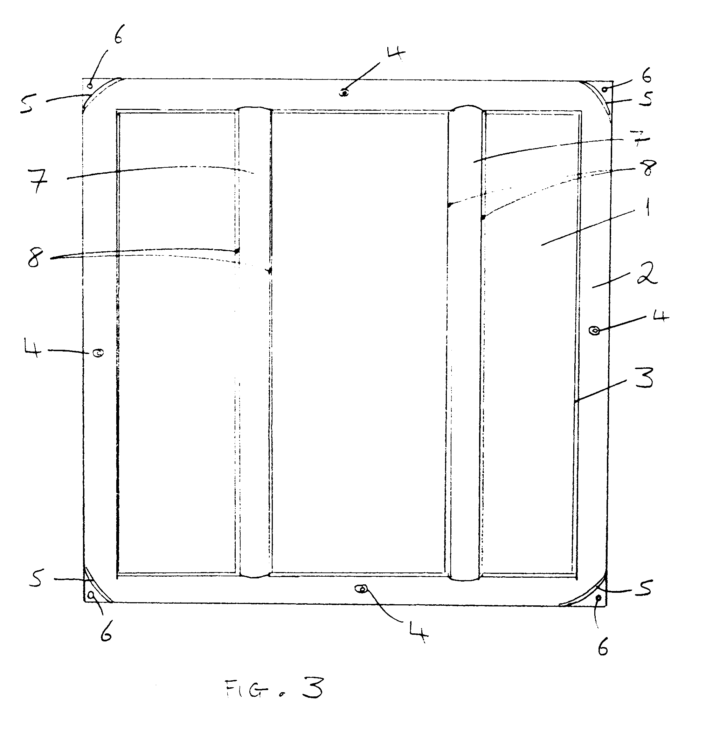

Referring firstly to Figures 1 and 2, there is shown a cover which includes a main sheet 1 which is square in shape. The edge region of each of the four sides has been folded over towards the centre of the sheet 1 and onto the upper surface of the sheet 1 so as to define a peripheral compartment 2 which extends around the entire periphery, the edge of each folded-over side then being heat-welded to form a seam 3 to make the compartment water-tight. Water can be introduced into, and discharged from, the compartment 2 by two port means 4 located at diametrically opposed corner regions of the compartment 2, the port means being capable of being twisted from an open mode to a closed mode, and vice versa. The cover is generally stored with the compartment 2 in a flattened condition, but when the port means 4 is opened and water introduced into the compartment 2 the compartment becomes inflated by water so that the cover, as viewed in the direction of the arrows II-II in Figure 1 takes on the appearance shown as the side view of Figure 2.

The cover can be made of any convenient size, for instance 20 feet by 20 feet (6.2 metres by 6.2 metres). The compartment 2, in the flattened condition as shown in Figure 1 can, with a cover of that typical size, have a width of 8 inches (approximately 20 cm) but when inflated the compartment has a diameter of approximately 5 inches (12.5 cm).

In the embodiment illustrated in Figure 3 the components which are substantially identical to the corresponding components in Figures 1 and 2 are indicated by the same reference numerals, numerals 1 to 4. However, in the embodiment illustrated in Figure 3 there has been provided a heat seal 5 near each corner of the cover and a brass eyelet 6 has been provided in the region between the seals 5 and the corners of the cover, to which eyelets 6 can be attached ropes or the like to assist in hauling the cover into position. Also, there are four port-means 4, each located in a central region of each run of the compartment 2.

In addition, there are two transverse ribs 7 each formed by providing an additional strip of the plastics material on the top of the upper surface of the main sheet 1 of the cover and then providing heat seals 8 along the two longitudinal edge regions. At each end of each rib 7 the interior of the rib communicates with the interior of the compartment 2 and there is the need for suitable sealing between the compartment 2 and the ribs 7 at the end regions of the latter.

Experiments have shown that even in a strong wind the cover of the type shown in Figures 1 and 2, when the compartment is filled with water, remains securely in place on a roof and, for this reason, the cover is known by the trade mark "LIMPET".

## Claims

1. A cover comprising:
a main sheet formed of a robust flexible material;
one or more than one compartment disposed around the periphery of the main sheet and capable of being filled with water; and
port means for allowing the introduction of water, as ballast, into the one or more than one compartment and for allowing the discharge of water from the one or more than one compartment.

2. A cover according to claim 1, further comprising attachment means, wherein the attachment means is preferably a flexible flange positioned in one or more peripheral regions of the cover in which are set eyes through which ropes or the like are capable of being threaded.

3. A cover according to claim 1 or 2, wherein the majority of the cover is formed of a robust plastics material or layers of plastics materials, and wherein the flexible material preferably has enough elasticity to accommodate expansion of water caused by freezing.

4. A cover according to any preceding claim, wherein the cover is rectangular, preferably square.

5. A cover according to any preceding claim, wherein the main sheet comprises a single panel, or wherein the main sheet is provided with a plurality of transverse ribs capable of being filled with water, and wherein the ribs are preferably sealed with respect to an adjacent compartment, and wherein the ribs preferably can each communicate, at their respective opposite ends, to two spaced apart regions of the peripheral compartment.

6. A cover according to any preceding claim, wherein the or each compartment is formed by folding over edge regions of the sheet towards the central region of the sheet, cutting out excess material in the region of the corners, and heat welding and/or stitching the edges to the underlying sheet material.

7. A cover according to any preceding claim, wherein the port means comprise snap-on female fittings capable of receiving a suitable male fitting at the end of a hose, and wherein the female fittings can preferably be opened or closed, and wherein, when the cover is in place, the port means can be opened and water can be passed along the hose, via the port means, and into the compartment, and wherein the hose is preferably provided with a valve means.

8. A cover according to any preceding claim, wherein there are at least two port means, preferably at least four port means, even more preferably more than four port means.

9. A cover according to claim 3, wherein the cover is capable of being joined to one or more other covers by fastening means, and wherein the fastening means is preferably a plurality of rings which link the eyes in the flange along one edge of one cover with the eyes in the flange along an adjacent edge of an adjacent cover.

10. A cover according to any preceding claim, which is capable of being transported on a trolley having one or more than one wheel.
